Europäisches Patentamt

European Patent Office

Office européen des brevets

(19)

(11) Publication number: **0 406 203 A2**

# EUROPEAN PATENT APPLICATION

(21) Application number: **90850255.2**

(22) Date of filing: **28.06.90**

(51) Int. Cl.⁵: **F16L 37/28**

(30) Priority: **29.06.89 SE 8902358**

(43) Date of publication of application:
**02.01.91 Bulletin 91/01**

(84) Designated Contracting States:
**BE CH DE ES FR GB IT LI NL**

(71) Applicant: **ATLAS COPCO TOOLS AB**
**P.O. Box 81 510**
**S-104 82 Stockholm(SE)**

(72) Inventor: **Jacobsson, Rolf Alexis**
**7A, Hemvägen**
**S-132 35 Saltsjö-Boo(SE)**

(74) Representative: **Pantzar, Tord**
**c/o Atlas Copco Tools AB Patentavdelningen**
**Box 815 10**
**S-104 82 Stockholm(SE)**

(54) **Rotary valve type quick coupling.**

(57) A rotary valve type quick coupling for interconnection of two pressure medium conduits, comprising on one hand a coupling unit (10) having a longitudinal communication passage (21) and a rotary valve element (18) which is formed with a diametrically extending bore (27), and on the other hand a tube shaped connector nipple (12) having an inlet end (35, 36) and an outlet end (13), of which the inlet end (35, 36) is receivable in the diametrically extending bore (27) in the valve element (18) for interconnection of the coupling unit (10) and the connector nipple (12).

The inner diameter of the inlet end (35, 36) of the connector nipple (12) is equeal to or smaller than the diameter of the communication passage (21) of the coupling unit (10), and the outlet end (13) of the connector nipple (12) comprises a diverging, pressure recovering outlet portion (40).

FIG 1

# ROTARY VALVE TYPE GUICK COUPLING

This invention relates to a rotary valve type quick coupling for interconnection of two pressure medium conduits.

In particular, the invention concerns a quick coupling of the above type which comprises on one hand a coupling unit having a longitudinal communication passage and a rotary valve element which is formed with a diametrically extending bore, and on the other hand a tube shaped connector nipple having an inlet end and an outlet end, of which the inlet end is receivable in the diametrically extending bore in said valve element for interconnection of the coupling unit and the connector nipple.

A problem concerned with quick couplings in general is their rather low flow capacity in relation to their outer dimensions. In particular, the flow capacity is restricted in the most common type of quick coupling in use today, namely the type including a seat valve and an axially movable release sleeve.

However, in the type of quick coupling referred to above, a rotary valve element provides for a straighter and smoother flow passage. Such a coupling is described in US Patent No 2,493,271 and comprises on one hand a coupling and valve unit and on the other hand a connector nipple. The flow passage has a constant diameter all the way through the coupling.

The most common use of quick couplings of this type is in connection with hand held pneumatic power tools where the connector nipple is threaded directly into the pressure air supply passage of the tool. In such cases, the cross section of the pressure air flow path has a larger cross section downstream the coupling.

A problem inherent in the pressure air supply systems today is that power tools requiring a large pressure medium flow, like big grinding machines and power wrenches, either are operated at too low a pressure due to losses in the supply hoses and the quick couplings or suffer from an awkward handling due to heavy and bulky large diameter couplings.

The main object of the present invention is to accomplish an improved quick coupling of the rotary valve type by which the pressure medium flow losses are considerably reduced.

This object is obtained by the invention as defined in the following claims.

A preferred embodiment of the invention is hereinbelow described in detail under reference to the accompanying drawing.

On the drawing:

Fig 1 shows a longitudinal section through a quick coupling according to the invention when occuppying a disconnected and closed position.

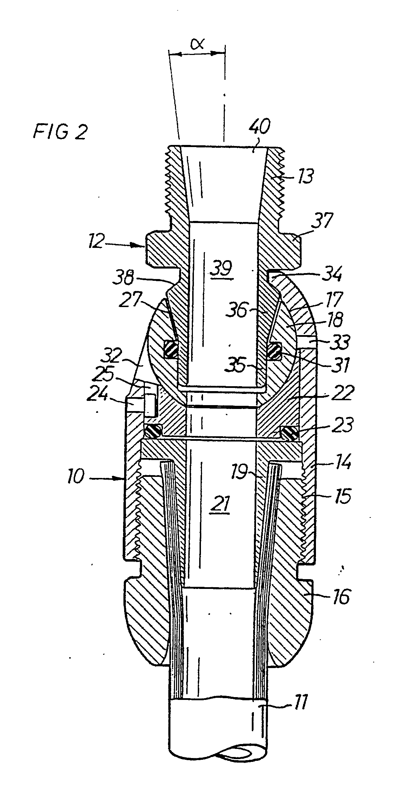

Fig 2 shows the quick coupling in Fig 1 in an interconnected open position.

The quick coupling shown in the drawing figures comprises on one hand a coupling and valve unit 10 for connection to a pressure air supply hose 11 and on the other hand a connector nipple 12 for interconnection with the unit 11. The connector nipple 12, which is formed with a threaded outlet end 13, is intended to be connected either to another hose or directly to the pressure air inlet passage of a power tool, which is the most common application.

The coupling unit 10 comprises a tubular casing 14 which at its one end has a female thread 15 for cooperation with a hose clamping nut 16 and which at its opposite end has a spherical seat 17 for guidingly supporting a ball shaped valve element 18. A conical sleeve 19 to be introduced into the end of the hose 11 rests against a shoulder 20 in the casing 14. The inner bore of the sleeve 19 forms the main part of the through flow passage 21 of the coupling unit 10.

A bearing element 22 for sealing cooperation with the valve element 18 is supported axially against the sleeve 19, and a resilient O-ring 23 located therebetween serves not only to seal off the bearing element 22 relative to the casing 14 but exerts an axial bias force on the bearing element 22 to ensure a proper sealing contact between the latter and the valve element 18. A stud 24 mounted in the casing 14 is received in a slot 25 in the bearing element 22 to prevent rotation of the latter.

The valve element 18 is formed with a diametrically extending socket 27 which comprises a cylindrical section 28 and a conical section 29. Between these sections there is provided an annular groove 30 for lodging a seal ring 31.

The conical outer section 29 of the socket 27 is open toward the outside of the coupling casing 14 via an elongate crest-shaped aperture 32 for introduction, turning and locking of the connector nipple 12. The cylindrical inner section 28 on the other hand communicates with the flow passage 21 of the coupling unit 10 or a vent opening 33, alternatively.

The connector nipple 12 has an inlet end which is formed to fit the socket 27 of the valve element 18. This inlet end comprises an outer cylindrical portion 35 to be received in the cylindrical socket section 28 of the valve element 18 and a conical portion 36 for cooperation with the conical section 29. The nipple 12 also has a hexagonal spanner grip portion 37, end between the conical section 29 and the grip portion 37 there is formed a conical shoulder 38 for engagement with a peripheral lock ridge 34 on the inner edge of the aperture 32 for locking the connector nipple 12 against disconnection when rotated to the straight, open position relative to the coupling housing 14.

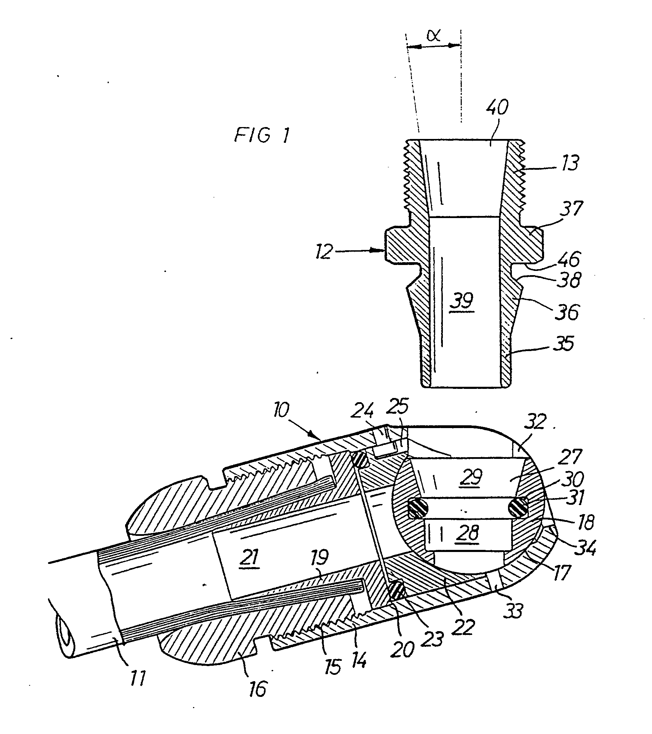

Inside, the inlet end of the nipple 12 comprises a cylindrical bore 39 of the same diameter as the flow passage 21 of the coupling unit 10, and at its outlet end 13 the nipple 12 has a conically diverging outlet portion 40. This outlet portion 40 has been given a very specific design, namely the shape of a Venturi diffusor which has a diverging angle of about 7°. See Fig 1. As a Venturi diffusor, the outlet portion 40 has the characteristic feature of bringing down the flow velocity and, thereby increase the static pressure of the air passing through the coupling. This pressure recovery is effective to reduce substantially the flow resistance at a given pressure drop not only in the coupling itself but to some extent in the entire hose-coupling arrangement.

The improvement gained by the diffusor type outlet portion 40 may be regarded either as a reduced pressure drop across the coupling or as an increased flow capacity through the coupling at a certain pressure drop.

In laboratory tests where acoupling according to the invention, i.e. including a Venturi outlet, has been compared to prior art couplings of the same type but without a Venturi outlet, it has been established that the flow capacity at a pressure drop of 0,2 bar is as much as 3 - 4 times higher in the coupling according to the invention than in the prior art couplings.

This substantial improvement is obtained when the coupling is used in combination with a supply hose having an inner diameter larger than that of the through passage 21 of the coupling and when the connector nipple 12 is connected directly to a power tool inlet passage also having a larger diameter than the passage 21. This is exactly the situation when using the coupling at a large flow demanding power tool, like for instance a big grinder. By using a coupling according to the invention it is possible to reduce the size of the coupling essentially without causing any further pressure drop in the pressure air supply.

diametrically extending bore (27), and on the other hand a tube shaped connector nipple (12) having an inlet end (35, 36) and an outlet end (13), said inlet end (35, 36) is receivable in said diametrically extending bore (27) in said valve element (18) for interconnection of said coupling unit (10) and said connector nipple (12),

**characterized in** that the inner diameter (39) at said inlet end (35, 36) of said connector nipple (12) is equal to or smaller than the diameter of said communication passage (21) and that said outlet end (13) of said connector (12) nipple comprises a diverging, pressure recovering outlet portion (40).

2. Coupling according to claim 2, wherein said outlet portion (40)comprises a venturi diffusor.

# Claims

1. A rotary valve type quick coupling for interconnection of two pressure medium conduits, comprising on one hand a coupling unit (10) having a longitudinal communication passage (21) and a rotary valve element (18) which is formed with a

FIG 1

FIG 2